# EUROPÄISCHE PATENTSCHRIFT

(11) **EP 3 094 496 B1**
(45) Veröffentlichungstag und Bekanntmachung des Hinweises auf die Patenterteilung: **03.03.2021**
(21) Anmeldenummer: 15700032.4
(22) Anmeldetag: 02.01.2015
(51) Int. Cl.: B60B 1/04, B60B 21/06, B60B 1/02

(54) **SPEICHENRADFELGE**
SPOKE WHEEL RIM
JANTE DE ROUE À RAYONS

(30) Priorität: 14.01.2014 DE 102014200542
(43) Veröffentlichungstag der Anmeldung: 23.11.2016
(73) Patentinhaber: Saxess Holding GmbH, 61476 Kronberg im Taunus (DE)
(72) Erfinder: FLUDER, Matthias, 08297 Zwönitz (DE); GUMPRICH, Pierre, 08058 Zwickau (DE)
(74) Vertreter: Westphal, Mussgnug & Partner Patentanwälte mbB
(86) Internationale Anmeldenummer: PCT/EP2015/050013
(87) Internationale Veröffentlichungsnummer: WO 2015/106977

(56) Entgegenhaltungen:
- FR-A1- 2 957 299
- US-A- 1 222 094
- US-A- 1 419 162
- US-A- 6 070 948
- US-A1- 2013 026 814
- US-A1- 2013 169 027

## Beschreibung

Die vorliegende Erfindung betrifft eine Speichenradfelge für einen schlauchlosen Reifen mit einem Felgenring gemäß dem Oberbegriff des Anspruchs 1. Die Erfindung betrifft außerdem ein Herstellungsverfahren zur Herstellung einer derartigen Speichenradfelge.

Bei Motorrädern und Fahrrädern, teilweise auch bei anderen Fahrzeugen, kommen oftmals Speichenräder zum Einsatz, die aufgrund ihrer Flexibilität innerhalb der Konstruktion und auch aufgrund ihrer Reparaturfreundlichkeit große Vorteile bieten. Zudem sind derartige Speichenradfelgen optisch äußerst ansprechend. Eine Speichenradfelge besteht üblicherweise aus einem Felgenring, der ein Felgenbett und zwei Felgenhörner aufweist, sowie Speichen, die eine Nabe mit dem Felgenring verbinden. Die Speichen sind dabei über sogenannte Speichennippel in Punzen am Felgenring gehalten, wobei die Punzen Vertiefungen im Felgenring sind und zur Ausrichtung und Fixierung der Speichen bzw. Speichennippel dienen. Die Speichen sind dabei über die Speichennippel in den jeweiligen Punzen gehalten und über ein Schraubgewinde miteinander verschraubt. Durch eine Verdrehung des Speichennippels relativ zur Speiche kann letztere gespannt bzw. justiert werden. Eine Anbindung des Speichennippels am Felgenring erfolgt über eine Bohrung innerhalb der Punze, wobei eine derartige Bohrung eine Leckagemöglichkeit darstellt, so dass derartige Speichenräder lediglich mit einen Schlauch zwischen Felgenring und eigentlichem Reifen benützt werden können. Dieser Schlauch wiederum wird durch ein sogenanntes Felgenband vor einem Kontakt mit den Speichen bzw. Speichennippeln geschützt.

Aus der DE 1 002 210 A1 ist eine gattungsgemäße Speichenradfelge für einen schlauchlosen Reifen mit einem Felgenring bekannt, der ein Felgenbett und zwei Felgenhörner aufweist. Ebenfalls vorgesehen sind Speichen, die eine Nabe mit dem Felgenring verbinden. Da die Speichen das Felgenbett durchstoßen, ist eine Einlage von zwei zentrierenden Dichtwülsten vorgesehen.

Aus der DE 10 2004 055 892 A1 ist eine weitere gattungsgemäße Speichenradfelge bekannt, bei welcher ebenfalls eine Dichtungsvorrichtung vorgesehen ist, die im Bereich eines Felgenbettes in einer Vertiefung angeordnet ist und Dichtflächen im Bereich beidseits einer Felgenmittenebene aufweist. Durch die Dichtungsvorrichtung ist ebenfalls die Verwendung eines schlauchlosen Reifens möglich.

Aus der DE 10 2011 081 069 A1 ist eine weitere Speichenradfelge für einen schlauchlosen Reifen mit einer Nabe und einem Felgenring bekannt. An einer Felgeninnenseite sind in Umfangsrichtung verteilt nach innen abstehende Speichenhalter vorgesehen, die jeweils eine Ausnehmung aufweisen. Die Nabe selbst ist über mehrere Speichen mit den Speichenhaltern des Felgenrings verbunden, wobei die in den Speichenhaltern vorgesehenen Ausnehmungen jeweils einen nach innen zur Nabe zu einer Seite des Speichenhalters hin offenen Schlitz aufweisen, so dass bei der Speichenmontage ein Endabschnitt einer Speiche von der offenen Seite der Schlitzes her in die Ausnehmung des Speichenhalters einführbar ist. Hierdurch soll eine Speichenradfelge mit vergleichsweise hoher Biege- und Torsionssteifigkeit erreicht werden.

Weitere Speichenradfelgen sind in der US 1 222 094 A, US 6 070 948 A, US 1 419 162 A, FR 2 957 299 A1, US 2013/169027 A1 und der US 2013/026814 A1 offenbart.

Nachteilig bei den aus dem Stand der Technik bekannten Speichenrädern ist insbesondere, dass bei der Verwendung eines Schlauches dieser anfällig für Beschädigungen ist, welche durch Durchschläge beim Überfahren von Kanten oder anderen Hindernissen entstehen. Dieses Problem wird zusätzlich verschärft, sofern sogenannte Reifenspanner zum Einsatz kommen, welche beispielsweise zum Festsitz des Reifens, insbesondere bei hoher Antriebsleistung oder geringem Luftdruck dienen. Der Schlauch und ein zusätzlich diesen schützendes Felgenband erhöhen jedoch das Gewicht, wodurch ein erhöhtes Rotationsträgheitsmoment geschaffen und die Manövrierfähigkeit eines mit einem derartigen Speichenrad ausgestatteten Kraftfahrzeugs reduziert wird. Zugleich ist ein derartiger Schlauch aufgrund seiner hohen Flexibilität meist nicht alterungsbeständig und muss daher turnusgemäß ausgetauscht werden. Durch die Verwendung eines Schlauches im Reifeninneren erhöht sich zudem auch die Abrollreibung, wodurch beispielsweise ein Kraftstoffverbrauch erhöht wird.

Um diese Nachteile zu vermeiden, gibt es bereits auch Speichenradfelgen, die im Bereich des Felgenbetts bis auf eine Ventilbohrung geschlossen sind, so dass auf den Einsatz eines Felgenbandes und eines das Gewicht erhöhenden Schlauchs verzichtet werden kann. Derartige Speichenräder werden üblicherweise als Guss- oder Schmiederäder ausgebildet und sind dadurch nicht nur vergleichsweise teuer und unwirtschaftlich (Schmiederad), sondern zudem aufgrund einer eingeschränkten Elastizität des Materials auch bruchanfällig (Gussrad).

Die vorliegende Erfindung beschäftigt sich daher mit dem Problem, für eine Speichenradfelge der gattungsgemäßen Art eine verbesserte Ausführungsform anzugeben, die sich insbesondere durch ein geringes Gewicht und eine einfache Montage auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, Speichen einer Speichenradfelge an einem Felgenring derselben in entsprechenden Nuten durch Stifte zu fixieren, wobei die Nuten den Felgenring nicht durchstoßen, so dass die Speichenradfelge für einen schlauchlosen Reifen verwendet werden kann. Der Felgenring besitzt üblicherweise ein Felgenbett sowie zwei Felgenhörner und ist über die Speichen mit einer Nabe der Speichenradfelge verbunden. Erfindungsgemäß sind am Felgenring in Achsrichtung/Radialrichtung verlaufende Nuten vorgesehen, in welche die Speichen jeweils mit einem komplementär ausgebildeten Speichenkopf eingreifen. Jeder Speichenkopf weist eine quer zur Speichenachse ausgebildete Durchgangsöffnung auf und zudem ist an jeder Nut ein diese und die Durchgangsöffnung des Speichenkopfes querender Stift vorgesehen, der beidseitig der Nut in einer Stiftaufnahme gehalten ist. Die Nuten und die Stiftaufnahmen sind in Radialrichtung in einem Bereich zwischen dem Felgenhorn und dem Felgenbett angeordnet.

Durch die Durchgangsöffnung im Speichenkopf und den durch diesen und die Nut geschobenen Stift ist ein ungewolltes Lösen der Speiche nicht mehr möglich. Die einschiebbaren Stifte verlaufen dabei in Umfangsrichtung der Speichenradfelge, wodurch eine vergleichsweise einfache Montage und Demontage der einzelnen Speichen möglich ist. Die Speichen werden somit nicht wie bisher über Speichennippel und Punzen in Durchgangsöffnungen im Felgenbett gehalten, so dass der Felgenring mit Ausnahme der Ventilöffnung keine weiteren leckageanfälligen Durchbrüche aufweist. Zugleich kann durch den Entfall des bisher erforderlichen Schlauches sowie durch den Entfall des bisher erforderlichen Felgenbandes das Gewicht des Rades reduziert und dadurch die Manövrierfähigkeit erhöht werden. Durch den Entfall des Schlauchs verringert sich auch die Abrollreibung des Rades, was bei einem Einsatz an einem Kraftfahrzeug, beispielsweise an einem Motorrad, für eine Reduzierung des Kraftstoffverbrauchs sorgt.

Generell lässt sich die erfindungsgemäße Speichenradfelge wirtschaftlich mit konventionellen Mitteln in Serienproduktion herstellen und ist dadurch kostengünstig und für den Großserieneinsatz geeignet. Die Einzelteile der Speichenradfelge, das heißt der Felgenring, die Speichen sowie die Nabe, sind einfach zu montieren und zugleich kann die erfindungsgemäße Speichenradfelge wie bisher konventionelle Speichenräder zentriert werden. Durch die Stifte ist die erfindungsgemäße Speichenradfelge zudem einfach zerlegbar und beispielsweise bei einem Speichenbruch auch reparabel.

Bei einer vorteilhaften Weiterbildung der erfindungsgemäßen Lösung sind die Stiftaufnahme und der zugehörige Stift gekrümmt. Durch die Krümmung kann eine exakte Lage des Stifts in der Stiftaufnahme erzwungen werden, wobei die Krümmung des Stiftes geringfügig von der Krümmung der Stiftaufnahme abweichen kann, wodurch der Stift in der Stiftaufnahme verklemmt. Zweckmäßig sind die Nuten um bis zu 30°, vorzugsweise um bis zu 25°, gegenüber der Radialrichtung der Speichenradfelge geneigt. Hierdurch lässt sich optisch besonders ansprechendes Design erreichen.

Bei einerweiteren vorteilhaften Ausführungsform der Erfindung ist im Bereich zwischen dem Felgenhorn und dem Felgenbett zumindest eine Hohlkammer angeordnet. Eine derartige Hohlkammer reduziert das Gewicht der Speichenradfelge, wodurch deren Rotationsträgheitsmoment ebenfalls reduziert werden kann, was sich wiederum positiv auf die Manövrierfähigkeit des Fahrzeugs auswirkt.

Die Erfindung beruht weiter auf dem allgemeinen Gedanken, die zuvor beschriebene Speichenradfelge mittels eines einfachen, kostengünstigen Herstellungsverfahrens herstellen zu können. Hierzu wird zunächst der Felgenring hergestellt, bzw. aus einem Leichtmetall, insbesondere aus Aluminium, durch Runden und Umformen eines Leichtmetallprofils zu einem Kreisringprofil, gratfreies Sägen zum Felgenring und passgenaues Zusammenfügen der Felgenringenden zum Felgenring. Anschließend werden die Nuten gefräst und die Stiftaufnahmen durch kreissegmentartiges Fräsen freigelegt. Die Speichen können nun mit ihrem Speichenkopf in die Nut eingeführt werden, bis die Durchgangsöffnung mit der Stiftaufnahme fluchtet, wobei durch ein Einschieben eines Stiftes in die Stiftaufnahme und durch die Durchgangsöffnung jeder Speichenkopffixiert wird. Die Speichen werden nun an ihrem dem Speichenkopfabgewandten Ende über Speichennippel mit einer Nabe verbunden, wobei die Speichenradfelge durch ein Relativverdrehen des Speichennippels zur Speiche ausgerichtet wird. Zu einer Reduzierung des Gewichts oder zur Bearbeitung von Bremsflächen kann der Felgenring mechanisch bearbeitet, insbesondere spanend oder schleifend bearbeitet werden, um das Gewicht am Felgenring und damit das Rotationsträgheitsmoment zu reduzieren. Das Spannen der Speichenradfelge erfolgt durch ein Verdrehen der Speichennippel, wie dies aus dem Stand der Tätigkeit bereits bekannt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,

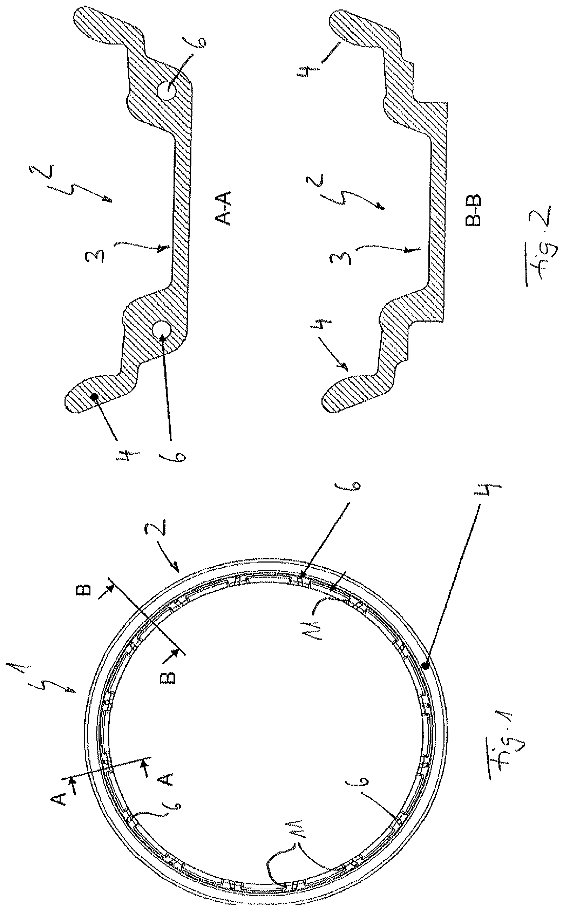

- Fig. 1: eine Ansicht auf einen Felgenring einer erfindungsgemäßen Speichenradfelge,
- Fig. 2: eine Schnittdarstellung durch die Ebenen A-A und B-B gemäß der Fig. 1,
- Fig. 3: eine Schnittdarstellung durch die Speichenradfelge im Bereich einer Anbindung der Speiche an einen Felgenring,
- Fig. 4: einen Stift zur Befestigung der Speiche am Felgenring,
- Fig. 5: ein Felgenring mit einer zusätzlichen Hohlkammer,
- Fig. 6: unterschiedliche Querschnitte eines möglichen Felgenrings,
- Fig. 7: eine Ansicht auf die erfindungsgemäße Speichenradfelge mit eingebauten Speichen.

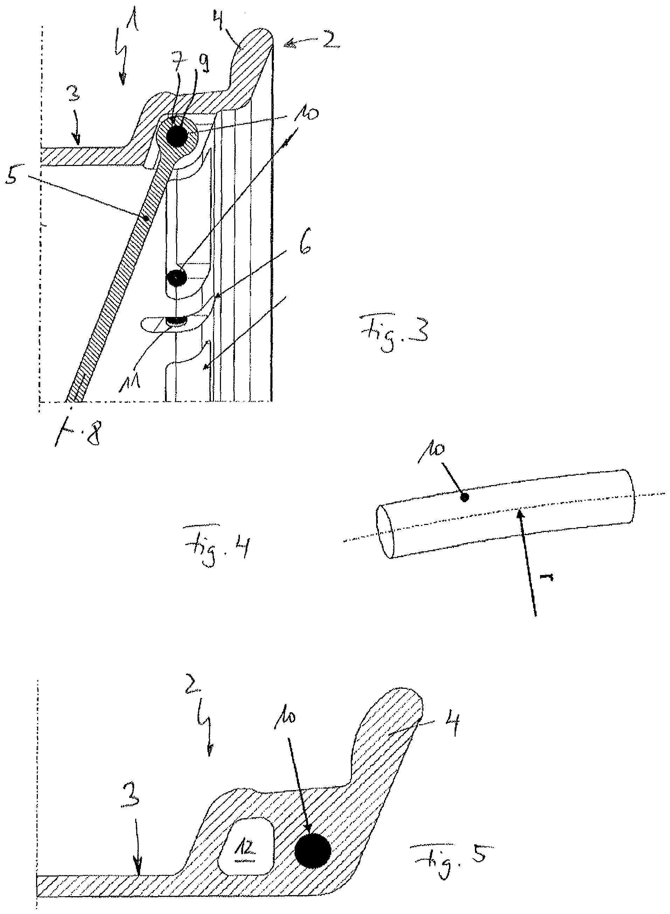

Entsprechend der Fig. 3 weist eine erfindungsgemäße Speichenradfelge 1 für einen nicht gezeigten schlauchlosen Reifen, einen Felgenring 2 auf, der ein Felgenbett 3 sowie zwei Felgenhörner 4 besitzt. Der Felgenring 2 ist dabei über Speichen 5 mit einer nicht gezeigten Nabe verbunden. Erfindungsgemäß sind nun am Felgenring 2 in Achsrichtung verlaufende Nuten 6 vorgesehen, in welche die Speichen 5 jeweils mit einem komplementär ausgebildeten Speichenkopf 7 eingreifen. Jeder Speichenkopf 7 weist dabei eine quer zur Speichenachse 8 ausgebildete Durchgangsöffnung 9 auf, wobei an jeder Nut 6 ein diese und die Durchgangsöffnung 9 des Speichen kopfes 7 querender Stift 10 vorgesehen ist, der beidseitig der Nut 6 in einer Stiftaufnahme 11 gehalten ist. Die Stiftaufnahme 11 und der zugehörige Stift 10 verlaufen dabei in Umfangsrichtung und sind gekrümmt, wodurch eine vergleichsweise einfache Montage und Demontage der einzelnen Speichen 5 möglich ist. Durch die Durchgangsöffnung 9 im Speichenkopf 7 und den durch diesen und die Nut 6 geschobenen Stift 10 ist ein ungewolltes Lösen der Speiche 5 nicht mehr möglich. Die Speichen 5 werden somit nicht wie bisher über Speichennippel und Punzen in Durchgangsöffnungen im Felgenbett 3 gehalten, so dass der Felgenring 2 mit Ausnahme der Ventilöffnung keine weiteren leckageanfälligen Durchbrüche aufweist. Zugleich kann durch den Entfall des bisher erforderlichen Schlauches sowie durch den Entfall des bisher erforderlichen Felgenbandes das Gewicht des Rades reduziert und dadurch die Manövrierfähigkeit erhöht werden. Durch den Entfall des Schlauchs verringert sich auch die Abrollreibung des Rades, was bei einem Einsatz an einem Kraftfahrzeug, beispielsweise an einem Motorrad, eine Reduzierung des Kraftstoffverbrauchs sorgt.

Bei einer vorteilhaften Weiterbildung der erfindungsgemäßen Lösung sind die Stiftaufnahme 11 und der zugehörige Stift 10 gekrümmt. Durch die Krümmung kann eine exakte Lage des Stifts 10 in der Stiftaufnahme 11 erzwungen werden, wobei die Krümmung des Stiftes 10 geringfügig von der Krümmung der Stiftaufnahme 11 abweichen kann, wodurch der Stift 10 in der Stiftaufnahme 11 verklemmt werden kann.

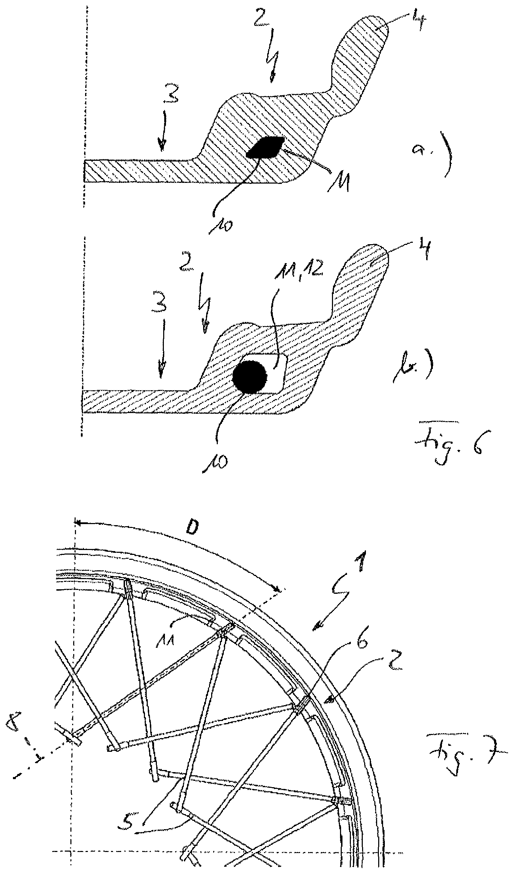

Betrachtet man die Fig. 3 bis 6, so kann man erkennen, dass die Nuten 6 und die Stiftaufnahmen 11 in einem Bereich zwischen dem Felgenhorn 4 und dem Felgenbett 3 angeordnet sind. Gemäß der Fig. 7 sind die Nuten 6 im Bereich beider Felgenhörner angeordnet sind, wodurch ein gekreuztes, ansprechendes Speichendesign erreicht wird. Die Nuten 6 sind dabei um bis zu 30°, vorzugsweise um bis zu 25°, gegenüber der Radialrichtung der Speichenradfelge 1 geneigt.

Betrachtet man die Fig. 5, so sieht man, dass im Bereich zwischen dem Felgenhorn 4 und dem Felgenbett 3 zumindest eine Hohlkammer 12 angeordnet ist. Eine derartige Hohlkammer 12 reduziert das Gewicht der Speichenradfelge 1, wodurch deren Rotationsträgheitsmoment ebenfalls reduziert werden kann, was sich wiederum positiv auf die Manövrierfähigkeit des Fahrzeugs auswirkt. Der Stift 10 ist vorzugsweise komplementär zur Stiftaufnahme 11 ausgebildet und/oder weist einen eckigen oder runden Querschnitt auf, wie dies den Fig. 5 und 6 zu entnehmen ist. In der Fig. 6b füllt der Stift 10 nur einen Teil der Stiftaufnahme 11 aus. In den Fig. 5 und 6a ist eine komplementäre Ausbildung der Stiftaufnahme 11 und des Stiftes 10 dargestellt.

Der Betrieb eines mit einer erfindungsgemäßen Speichenradfelge 1 ausgestatteten Fahrzeugrades ist auch mit niedrigem Luftdruck möglich, was besondere Vorteile im Gelände schafft. Im Geländeeinsatz kann es notwendig sein, mit geringem Luftdruck zu fahren, da sich dadurch die Reifenauflagefläche gegenüber der Fahrbahn vergrößert und somit die Traktion verbessert wird. Ein herkömmliches Speichenrad mit Schlauch kann aber nicht mit beliebig niedrigem Luftdruck gefahren werden, da sonst die Gefahr besteht, dass eine Relativbewegung zwischen Reifen und Felge stattfindet. Diese Relativbewegung hätte ein Abreißen des Ventils am Luftschlauch zur Folge. Aus diesem Grund werden im Geländesport Reifenspanner eingesetzt, mit den bereits zum Stand der Technik erwähnten Gefahren für den Luftschlauch. Bei einem Schlauchlos-System ist eine Relativbewegung zwischen Reifen und Felge bis zu einer gewissen Grenze unproblematisch, d.h. sie führt nicht sofort zum Luftdruckabfall.

Die Herstellung der erfindungsgemäßen Speichenradfelge 1 erfolgt wie folgt: Zunächst wird der Felgenring 2 aus einem Leichtmetall, insbesondere aus Aluminium, durch Runden und Umformen eines Leichtmetallprofils zu einem Kreisringprofil gebogen, anschließend zum Felgenring 2 gratfrei gesägt und passgenau an den Felgenringenden zum Felgenring 2 zusammengefügt. Anschließend werden die Nuten 6 gefräst und die Stiftaufnahmen 11 durch kreissegmentartiges Fräsen freigelegt. Die Speichen 5 können nun mit ihrem Speichenkopf 7 in die Nut 6 eingeführt werden, bis die Durchgangsöffnung 9 mit der Stiftaufnahme 11 fluchtet, wobei durch ein Einschieben eines Stiftes 10 in die Stiftaufnahme 11 und durch die Durchgangsöffnung 9 jeder Speichenkopf 7 fixiert wird. Die Speichen 5 werden nun an ihrem dem Speichenkopf 7 abgewandten Ende über Speichennippel mit einer Nabe verbunden, wobei die Speichenradfelge 1 durch ein Relativverdrehen des Speichennippels zur Speiche 5 ausgerichtet wird. Zu einer Reduzierung des Gewichts oder zur Bearbeitung von Bremsflächen kann der Felgenring 2 mechanisch bearbeitet, insbesondere spanend oder schleifend bearbeitet werden, um das Gewicht am Felgenring 2 und damit das Rotationsträgheitsmoment zu reduzieren. Das Spannen der Speichenradfelge 1 erfolgt durch ein Verdrehen der Speichennippel, wie dies aus dem Stand der Tätigkeit bereits bekannt ist.

Mit der erfindungsgemäßen Speichenradfelge 1 lassen sich folgende Vorteil im Vergleich zu herkömmlichen Speichenradfelgen realisieren:
- es ist die Verwendung eines schlauchlosen Reifens möglich, so dass ein bisher erforderlicher Schlauch sowie ein Felgenband entfallen können, wodurch die Masse des Fahrzeugrades reduziert und die Manövrierfähigkeit des Fahrzeugs verbessert werden kann,
- durch den Entfall des Schlauchs verringert sich die Abrollreibung des Fahrzeugrads,
- die Anfälligkeit des Schlauchs für Undichtigkeit, beispielsweise durch Alterung oder Quetschungen, entfällt,
- die erfindungsgemäße Speichenradfelge 1 hat in etwa die gleiche Masse wie eine konventionelle Speichenradfelge, so dass keine negative Beeinflussung Manövrierfähigkeit des Fahrzeugs zu befürchten ist,
- eine Undichtigkeit des Felgenrings 2 ist systemisch ausgeschlossen, da sich im Felgenring 2 bis auf das Ventilloch keine Durchbrüche befinden,
- der Betrieb des Fahrzeugrades mit niedrigem Luftdruck ist dennoch möglich,
- die Dehngrenze des Felgenmaterials liegt auf dem Niveau von konventionellen Speichenradfelgen und ist daher auch für den Geländeeinsatz geeignet,
- die erfindungsgemäße Speichenradfelge 1 ist wirtschaftlich mit konventionellen Mitteln in Großserienproduktion herstellbar,
- die Einzelteile des Fahrzeugrades, das heißt die Speichen 5, Schrauben 10, etc. sind einfach zu montieren, wodurch die Speichenradfelge 1 wie ein konventionelles Speichenrad zentrierbar ist,
- die Speichenradfelge 1 ist mit einfachem Werkzeug (Schraubenzieher und Gewindeschlüssel) zerlegbar und reparabel (z.B. bei einem Speichenbruch).

## Patentansprüche

1. Speichenradfelge (1) für einen schlauchlosen Reifen mit einem Felgenring (2), der ein Felgenbett (3) und zwei Felgenhörner (4) aufweist, sowie mit Speichen (5), die eine Nabe mit dem Felgenring (2) verbinden,
wobei
- am Felgenring (2) in Radialrichtung verlaufende Nuten (6) vorgesehen sind, in welche die Speichen (5) jeweils mit einem komplementär ausgebildeten Speichenkopf (7) eingreifen,
- jeder Speichenkopf (7) eine quer zur Speichenachse (8) ausgebildete Durchgangsöffnung (9) aufweist,
- an jeder Nut (6) ein diese und die Durchgangsöffnung (9) des Speichenkopfes (7) querender Stift (10) vorgesehen ist, der beidseitig der Nut (6) in einer Stiftaufnahme (11) gehalten ist, **dadurch gekennzeichnet, dass**
- die Nuten (6) und die Stiftaufnahmen (11) in Radialrichtung in einem Bereich zwischen dem Felgenhorn (4) und dem Felgenbett (3) angeordnet sind.

2. Speichenradfelge nach Anspruch 1, **dadurch gekennzeichnet, dass** die Stiftaufnahme (11) und der zugehörige Stift (10) in Umfangsrichtung verlaufen und gekrümmt sind.

3. Speichenradfelge nach einem der vorhergehenden Ansprüche, **dadurch gekennzeichnet, dass** die Nuten (6) im Bereich beider Felgenhörner (4) angeordnet sind.

4. Speichenradfelge nach einem der Ansprüche 1 bis 3, **dadurch gekennzeichnet, dass** die Nuten (6) um bis zu 30°, vorzugsweise um bis zu 25°, gegenüber der Radialrichtung der Speichenradfelge (1) geneigt sind.

5. Speichenradfelge nach einem der vorhergehenden Ansprüche, **dadurch gekennzeichnet, dass** im Bereich zwischen dem Felgenhorn (4) und dem Felgenbett (3) zumindest eine Hohlkammer (12) angeordnet ist.

6. Speichenradfelge nach einem der Ansprüche 1 bis 5, **dadurch gekennzeichnet, dass** der Stift (10) komplementär zur Stiftaufnahme (11) ausgebildet ist.

7. Speichenradfelge nach einem der vorhergehenden Ansprüche, **dadurch gekennzeichnet, dass** der Stift (10) einen eckigen oder runden Querschnitt aufweist.

8. Verfahren zur Herstellung einer Speichenradfelge (1) nach einem der vorhergehenden Ansprüche, bei dem
- der Felgenring (2) durch Runden und Umformen eines Leichtmetallprofils zu einem Kreisringprofil, gratfreies Sägen zum Felgenring und passgenaues Zusammenfügen der Felgenringenden zum Felgenring (2) hergestellt wird,
- die Nuten (6) gefräst werden
- die Stiftaufnahmen (11) durch kreissegmentartiges Fräsen freigelegt werden,
- die Speichen (5) mit ihrem Speichenkopf (7) in die Nut (6) eingeführt werden, bis die Durchgangsöffnung (9) mit der Stiftaufnahme (11) fluchtet,
- jeder Speichenkopf (7) mit einem Stift (10) fixiert wird,
- die Speichen (5) an ihrem dem Speichenkopf (7) abgewandten Ende über Speichennippel mit einer Nabe verbunden werden,
- durch ein Relativverdrehen des Speichennippels zur Speiche (5) die Speichenradfelge (1) ausgerichtet wird.

## Claims

1. Spoke wheel rim (1) for a tubeless tyre with a rim ring (2) which comprises a rim base (3) and two rim flanges (4), and with spokes (5) which connect a hub to the rim ring (2), wherein
- grooves (6) are provided on the rim ring (2) running in the radial direction, in which the spokes (5) each engage with a complementarily formed spoke head (7),
- each spoke head (7) has a passage opening (9) formed transversely to the spoke axis (8),
- a pin (10) is provided on each groove (6), which pin (10) crosses the groove (6) and the through opening (9) of the spoke head (7) and is held on both sides of the groove (6) in a pin retainer (11), **characterized in that**
- the grooves (6) and the pin retainers (11) are arranged in the radial direction in a region between the rim flange (4) and the rim base (3).

2. Spoke wheel rim according to claim 1, **characterized in that** the pin retainer (11) and the associated pin (10) extend in the circumferential direction and are curved.

3. Spoke wheel rim according to one of the preceding claims, **characterized in that** the grooves (6) are arranged in the area of both rim flanges (4).

4. Spoke wheel rim according to one of the claims 1 to 3, **characterized in that** the grooves (6) are inclined by up to 30°, preferably by up to 25°, relative to the radial direction of the spoke wheel rim (1).

5. Spoke wheel rim according to one of the preceding claims, **characterized in that** at least one hollow chamber (12) is arranged in the region between the rim flange (4) and the rim base (3).

6. Spoke wheel rim according to one of the claims 1 to 5, **characterized in that** the pin (10) is designed to be complementary to the pin retainer (11).

7. Spoke wheel rim according to one of the preceding claims, **characterized in that** the pin (10) has an angular or round cross-section.

8. Method for producing a spoke wheel rim (1) according to one of the preceding claims, in which
- the rim ring (2) is produced by rounding and shaping a light metal profile into a circular ring profile, sawing it without burrs to the rim ring (2) and joining the rim ring ends into the rim ring (2) with an exact fit,
- the grooves (6) are milled,
- the pin retainers (11) are exposed by circular segment milling,
- the spokes (5) with their spoke head (7) are inserted into the groove (6) until the passage opening (9) is aligned with the pin retainer (11),
- each spoke head (7) is fixed with a pin (10),
- the spokes (5) are connected to a hub via spoke nipples at their end facing away from the spoke head (7),
- the spoke wheel rim (1) is aligned by rotating the spoke nipple relative to the spoke (5).

## Revendications

1. Jante de roue à rayons (1) pour un pneu sans chambre avec un anneau de jante (2), lequel comprend une base de jante (3) et deux rebords de jante (4), ainsi que des rayons (5) qui relient un moyeu à l'anneau de jante (2),
selon laquelle
- des rainures (6) s'étendant dans une direction radiale sont prévues sur l'anneau de jante (2), rainures dans lesquelles les rayons (5) viennent respectivement en prise avec une tête de rayon (7) complémentaire,
- chaque tête de rayon (7) comprend une ouverture traversante (9) perpendiculaire à l'axe de rayon (8),
- au niveau de chaque rainure (6), une broche (10) passant à travers ladite rainure et l'ouverture traversante (9) de la tête de rayon (7) est prévue, la broche étant retenue dans un logement de broche (11) des deux côtés de la rainure (6), **caractérisée en ce que**
- les rainures (6) et le logement de broche (11) sont disposés dans la direction radiale dans une zone située entre le rebord de jante (4) et la base de jante (3).

2. Jante de roue à rayons selon la revendication 1, **caractérisée en ce que** le logement de broche (11) et la broche correspondante (10) s'étendent dans une direction périphérique et sont courbées.

3. Jante de roue à rayons selon l'une des revendications précédentes, **caractérisée en ce que** les rainures (6) sont disposées dans la zone des deux rebords de jante (4).

4. Jante de roue à rayons selon l'une des revendications 1 à 3, **caractérisée en ce que** les rainures (6) sont inclinées jusqu'à 30°, de préférence jusqu'à 25°, par rapport à la direction radiale de la jante de roue à rayons (1).

5. Jante de roue à rayons selon l'une des revendications précédentes, **caractérisée en ce qu'**au moins une chambre creuse (12) est disposée dans la zone située entre le rebord de jante (4) et la base de jante (3).

6. Jante de roue à rayons selon l'une des revendications 1 à 5, **caractérisée en ce que** la broche (10) est complémentaire au logement de broche (11).

7. Jante de roue à rayons selon l'une des revendications précédentes, **caractérisée en ce que** la broche (10) comprend une section transversale polygonale ou ronde.

8. Procédé de fabrication d'une jante de roue à rayons (1) selon l'une des revendications précédentes, selon lequel
- on fabrique l'anneau de jante (2) par arrondissement et formage d'un profil de métal léger pour former un profil d'anneau de cercle, par sciage sans formation de copeaux pour former un anneau de jante et par assemblage de manière ajustée des extrémités de l'anneau de jante pour former l'anneau de jante (2),
- on fraise les rainures (6),
- on expose les logements de broche (11) par fraisage en forme d'arc de cercle,
- on introduit les rayons (5) avec leur tête de rayon (7) dans la rainure (6) jusqu'à ce que l'ouverture traversante (9) soit alignée avec le logement de broche (11),
- on fixe chacune des têtes de rayon (7) avec une broche (10),
- on relie les rayons (5) à un moyeu au niveau de leur extrémité opposée à la tête de rayon (7) via des écrous de rayon,
- on aligne la jante de roue à rayons (1) en tournant les écrous de rayon par rapport au rayon (5).
